Europäisches Patentamt

European Patent Office

Office européen des brevets

(11) Numéro de publication : **0 382 656 B1**

# (12) FASCICULE DE BREVET EUROPEEN

(45) Date de publication du fascicule du brevet :
**23.12.92 Bulletin 92/52**

(21) Numéro de dépôt : **90420059.9**

(22) Date de dépôt : **02.02.90**

(51) Int. Cl.$^5$ : **A23G 3/00,** A23B 7/08,
A23L 1/212, A23L 1/314,
A23B 4/14

(54) **Procédé pour stabiliser et conserver les produits biologiques, et produits ainsi traités.**

(30) Priorité : **07.02.89 FR 8901787**

(43) Date de publication de la demande :
**16.08.90 Bulletin 90/33**

(45) Mention de la délivrance du brevet :
**23.12.92 Bulletin 92/52**

(84) Etats contractants désignés :
**BE CH DE ES FR GB IT LI NL**

(56) Documents cités :
**EP-A- 0 276 353**
**AT-A- 332 201**
**FR-A- 709 424**
**FR-A- 1 389 700**
**FR-A- 1 585 399**
**FR-A- 2 271 776**

(56) Documents cités :
**FR-A- 2 384 461**
**FR-A- 2 442 596**
**US-A- 4 098 912**
**US-A- 4 564 525**
**DERWENT FILE SUPPLIER, AN 85-287848,**
**1985, Derwent Publications Ltd, London, GB**

(73) Titulaire : **GATTEFOSSE S.A.**
**36 chemin de Genas**
**F-69800 Saint Priest (FR)**

(72) Inventeur : **Bousser, Robert**
**13 Rue de Bassano**
**F-75116 Paris (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

## Description

L'invention concerne un procédé pour stabiliser et conserver les produits biologiques ; elle se rapporte également aux produits ainsi traités.

Dans la suite de la description et dans les revendications, par "produits biologiques", on désigne tous produits biologiques, d'origine animale et végétale. Ce peut être des plantes, des fruits, des légumes, des épices, etc. . Si le plus généralement, l'invention est décrite dans son application relative aux plantes, elle n'est nullement limitée à cette forme de réalisation et peut englober d'autres produits biologiques du règne animal, tels que par exemple les sérums, les organes, le placenta, les tissus.

Comme on le sait, certains produits biologiques sont conservés en les associant à certains éléments, tels que des sels, des sucres, des alcools, des acides, dénommés "dépresseurs" ou "inhibiteurs" qui ont la capacité de réduire ou supprimer les dégradations d'origine biologique. Tel est le cas des semi-conserves et des conserves à humidité intermédiaire (30 à 35 %). A titre d'exemple, on peut citer les confitures, les fromages, la choucroute, les salaisons, les confits, les sirops, les conserves au vinaigre, à l'eau de vie, etc. . Malheureusement, comme on le sait, ces traitements déforment, sinon altèrent les propriétés initiales des produits à conserver, notamment sur le plan gustatif ou sur le plan de la conservation des principes actifs. Il en est de même dans le cas d'utilisation du sucre qui est l'un des éléments dépresseurs les plus intéressant en raison de son goût agréable, mais le sucre nécessite l'emploi concomittant de la chaleur pour évaporer une partie de l'eau contenue dans les produits biologiques à conserver, ce qui nécessite donc une phase de cuisson et entraîne une perte des arômes.

Dans le document FR-A-1 299 290, on a proposé un procédé pour préparer un produit à base de fruits, qui consiste à mélanger au malaxeur des fruits déshydratés avec du sucre et de l'eau, puis à maintenir le mélange à une température inférieure à 0°C. On obtient de la sorte une préparation facile à mouler, dans lequel le sucre sert d'agent édulcorant et de liant. Ces produits conviennent parfaitement en pâtisserie ou en confiserie, mais ils ne peuvent être conservés au-delà de quelques jours, hors du froid.

Dans le document US-A-3 953 615, on a décrit un procédé de conservation par assèchement, dans lequel on part également de produits déshydratés que l'on mélange à une quantité très élevée de dextrose, à savoir onze fois et plus la quantité d'eau contenue dans les produits à traiter. Après séchage, on obtient des poudres faciles à diluer dans l'eau et convenant parfaitement pour la préparation de boissons sucrées parfumées. Mais il s'agit là de produits finis s'écartant très nettement des produits d'origine, frais et de leurs qualités de départ.

Dans le document FR-A 1 585 399, l'inventeur a proposé un procédé de déshydratation osmotique des fruits par mélange avec une forte quantité de dextrose (trois fois et plus la quantité de produits frais). Cette technique coûteuse donne malheureusement au mélange un goût sucré prononcé certes recherché, et conduit à des produits manquant de souplesse et ne respectant pas le parfum des fruits de départ.

Dans le document FR 509 424, on a proposé de broyer des fruits frais, puis, après filtration, de mélanger le jus avec du dextrose, du sucrose ou du maltose. Par filtration et centrifugation successives, c'est-à-dire par un procédé coûteux, on obtient des jus qui manquent de stabilité, sauf à leur ajouter des proportions importantes d'agents conservateurs.

L'invention, tout en restant axée sur l'emploi de dextrose, pallie ces inconvénients. Elle vise un procédé qui respecte les propriétés des produits biologiques traités, notamment des plantes végétales, et qui permet de conserver à ces produits toutes leurs propriétés initiales, tant sur le plan des principes actifs, que gustatifs que sur le plan des parfums et des couleurs (vitamines, oligo-éléments, principes actifs, huiles essentielles, chlorophyle, etc.).

Le procédé selon l'invention, dans lequel on mélange du dextrose à des produits biologiques consiste :

- à ajouter auxdits produits biologiques frais, à raison de deux fois à deux fois et demi la quantité d'eau contenue dans ces produits biologiques frais, un mélange pulvérulent comprenant du dextrose et du saccharose, et contenant de 37 à 46,5 % en poids de dextrose ;

- puis, à soumettre l'ensemble à température ambiante à un broyage rapide par cisaillement, de manière à obtenir un mélange intime, pâteux et homogène.

En d'autres termes, l'invention consiste à ajouter à des produits biologiques frais, notamment des plantes fraiches et ce, dans une proportion précise, à savoir à raison de deux fois à deux fois et demi la quantité d'eau contenue dans ces plantes, de préférence 2,3 fois, un mélange spécifique de dextrose et de saccharose, ces deux produits étant également mélangés entre eux dans une proportion prédéterminée, puis à mélanger intimément et de manière homogène l'ensemble à température ambiante par une action de broyage par cisaillement pour éviter tout échauffement, de manière à obtenir une pâte, une purée, une crème, d'utilisation commode, un peu analogue à une marmelade, et ce sans faire appel à un apport calorifique. L'intérêt de la mise en oeuvre du mélange dextrose-sacchrose conforme à l'invention par rapport au saccharose seul, réside essentiellement dans le fait que ce mélange d'une part, est plus soluble dans l'eau contenue dans le produit biologique à traiter, et atteint facilement les concentrations de 65 à 70 % en poids, nécessaire à la stabilisation de ces produits, d'autre part, présente un pouvoir dépressif plus important, et enfin un pouvoir réducteur intéressant. De la sorte, la mise en oeuvre de ce mélange de saccharose-dextrose dans des proportions spécifiques, permet de stabiliser les produits biologiques, sans faire appel à un apport calorifique, c'est-à-dire aux phénomènes concomittants de cuisson et d'évaporation.

De plus, l'intervention du dextrose, essentiellement comme agent réducteur, améliore de manière inattendue d'autres propriétés du mélange. On peut citer :
- l'exaltion des saveurs et des aromes ;
- le goût agréable moins sucré ;
- la facilité de digestion du mélange ;
- la possibilité d'obtenir un produit bon marché compatible avec les exigences de l'industrie pharmaceutique ou diététique.

Selon une caractéristique importante de l'invention, le rapport pondéral entre le dextrose et le saccharose doit être compris entre 37 et 46,5 %, et de préférence au vosinage de 40 à 42 %. Or on a observé que cette sélection augmentait de manière inattendue la solubilité du dextrose dans les produits biologiques frais. Si ce rapport est inférieur à 37 %, le mélange est insuffisamment réducteur. En revanche, si ce rapport excède 46,5 %, le dextrose n'est plus soluble en totalité et l'excès inutile de dextrose n'entraîne aucune amélioration.

Ainsi, le procédé selon l'invention non seulement permet d'améliorer la stabilisation et la conservation des propriétés actives, gustatives et odorantes des produits biologiques, notamment des plantes, mais ce sans affecter les autres propriétés de ces produits, ce que l'on ne savait pas obtenir économiquement jusqu'alors.

Avantageusement, en pratique :
- les produits sont traités de suite après avoir été récoltés (plantes) ou prélevés, c'est-à-dire au moment où ils ont leurs principes actifs aussi efficaces que possible ; dans une variante, les plantes sont préalablement légèrement fanées ;
- on ajoute au mélange de sucres des agents stabilisateurs, tels que du chlorure de sodium et de l'acide citrique ;
- au mélange de sucres, on peut ajouter un autre sucre, à savoir le sorbitol, notamment pour stabiliser les réactions de Maillard ;
- une formule avantageuse de la composition stabilisante selon l'invention comprend en poids :

|  |  |  |
|---|---|---|
| . | saccharose (en poudre glace) | 51 % |
| . | dextrose | 42 % |
| . | Chlorure de sodium | 3,5 % |
| . | Sorbitol | 2,5 % |
| . | acide citrique | 1,0 % |

- dans le cas de produits biologiques très oxydables, lors du broyage, on ajoute dans le mélange des traces de métabisulfite, ou de tout autre anti-oxydant équivalent ;
- pour éviter tout risque d'apparition de moisissures sur les produits finis (phénomène assez classique sur les produits sucrés encore humides, tels que les confitures), on peut ajouter, dans le mélange, quelques traces d'acide sorbique ou de tout autre acide fongique équivalent ;
- la quantité de cette composition caractéristique est de l'ordre de deux à deux fois et demi la quantité d'eau contenue dans les produits à traiter ; cette proportion varie selon que le produit est plus ou moins oxydable ; comme déjà dit, on obtient normalement de bons résultats avec une quantité voisine de deux fois trois (2,3).

Le broyage caractéristique s'effectue de manière connue, par exemple par cisaillement rapide à température ambiante, notamment au moyen de couteaux rotatifs. Il importe que ce broyage ne provoque pas d'échauffement notable du mélange. On obtient ainsi un produit pâteux sous forme de purée, de crème, faciles à conserver à température ambiante sans précaution particulière, même pendant plusieurs mois. Les pâtes ainsi obtenues peuvent être conditionnées de manière conventionnelle, notamment dans des récipients étanches, de préférence opaques, tels que par exemple dans des tubes, dans des pots, dans des conteneurs, etc. . Ces pâtes sont stables et faciles à doser en principes actifs. Elles sont également facilement solubles, donc commodes à utiliser. Elles sont également particulièrement parfumées.

Dans une forme d'exécution avantageuse, on peut introduire du beurre dans le mélange, par exemple à raison de un quart ou un cinquième du poids total dudit mélange. On obtient de la sorte un produit facile à tartiner, à conserver ensuite en réfrigérateur.

L'invention se distingue essentiellement de l'état de la technique citée dans le préambule par le fait :
- d'une part, que l'on part toujours de produits frais et non déshydratés, qui possèdent alors leurs propriétés gustatives actives et organoleptiques à leur optimum ;
- d'autre part, par le choix d'un mélange de sucre spécifiques, à savoir : dextrose et saccharose, en proportions précises et critiques entre eux ;
- par ailleurs, par l'introduction de ce mélange en quantité également précise, à savoir deux à deux fois et demie la quantité d'eau contenue dans les produits à traiter, et non plus onze fois et plus ;
- enfin, par l'étape de mélange par broyage rapide sans présence d'eau, ce qui permet de rompre les cellules, pour obtenir un mélange intime, pateux, homogène et stable.

La manière dont l'invention peut être réalisée et les avantages qui en découlent ressortiront mieux des exemples de réalisation qui suivent.

## Exemple 1 - Préparation d'une pâte de Mélisse

Moins de douze heures après la récolte des feuiles, on met mille cinq cent (1500) grammes de feuilles de mélisse (teneur en eau : 82 %) dans un broyeur à couteaux en acier inoxydable de dix litres. A ces feuilles, on ajoute deux mille huit cent trente (2830) grammes d'un mélange pulvérulent contenant :
- 1187 g de dextrose (41,9 %),
- 1455 g de saccharose sous forme de sucre glace (51,4 %),
- 71 g de sorbitol (2,5 %),
- 98 g de sel (3,5 %),
- 29 g d'acide citrique (1,0 %).

Le broyeur à couteaux est mis en route pendant dix secondes (vitesse de rotation : 800 t/min). On arrête pendant dix secondes et on remet en route pendant une minute à une vitesse de 1200 t/min.

Cette action de broyage/mélangeage rapide mais poussé, permet un contact intime des particules du végétal et des sucres qui se dissolvent alors rapidement dans l'eau contenue dans la mélisse.

On obtient une pâte homogène dont la teneur en humidité est voisine de 29 %. On analyse les huiles essentielles contenues dans le mélange après trente et soixante jours de stockage. On obtient 0,14 % d'huile essentielle par rapport au poids de la plante sèche.

## Exemple 2 - Pâte de sauge officinale (Salvia Officinalis)

On répète l'exemple 1 en plaçant dans le broyeur 1200 g de sauge officinale fraîche (teneur en eau : 85%) et 2350 g d'une composition pulvérulente contenant 993 g de dextrose, 1193 g de sucre glace (saccharose), 82 g de sel NaCl, 58 g de sorbitol et 24 g d'acide citrique.

On obtient une pâte homogène dont le dosage des huiles essentielles après trente et soixante jours est stable à 1,8 % rapporté au poids de la plante sèche. Cette pâte est conservée dans des pots et peut être avantageusement utilisée en addition dans les sauces culinaires.

## Exemple 3 - Pâte de tilleul

On recueille de manière connue les sommités fleuries fraiches. Moins de douze heures après la récolte de ces sommités, on place 50 kg de celles-ci (teneur en eau : 80 %) dans un broyeur à couteaux du type STEPHAN de 200 litres de capacité utile et on ajoute 42 kg de dextrose, 42 kg de saccharose, 2, 25 kg de sorbitol, 2,70 kg de sel NaCl, 0,9 kg d'acide citrique.

On broie dans un premier temps au moyen des couteaux pendant trente secondes à une vitesse lente de 1000 t/min. On complète ce prébroyage par un broyage-mélangeage pendant une minute à 5000 t/min.

On obtient ainsi une marmelade homogène de couleur jaune-verdâtre, ayant l'odeur caractéristique du tilleul. On conditionne en pot de verre.

Cette pâte peut être utilisée comme tisane à raison de une à deux cuillères à dessert dans un verre d'eau tiède.

Le procédé selon l'invention présente de nombreux avantages par rapport aux différents procédés connus à ce jour. On peut citer :
- la facilité et l'économie de mise en oeuvre,
- l'excellente conservation des principes actifs des produits traités,
- la stabilité et la facilité de stockage pendant plusieurs mois de ces produits,
- et une excellente préservation des couleurs et des parfums.

De la sorte, ces produits biologiques, notamment les plantes peuvent recevoir de très larges applications tels que produits alimentaires, diététiques, aromatiques et condimentaires, produits pharmaceutiques pour l'homme ou l'animal, compléments alimentaires, etc., soit directement, soit en complément ou en addition à d'autres préparations.

## Revendications

1.  Procédé pour stabiliser et conserver les propriétés des produits biologiques, dans lequel on mélange du dextrose à ces produits, **<u>caractérisé</u>** en ce qu'il consiste :
    - à ajouter auxdits produits biologiques frais, à raison de deux fois à deux fois et demi la quantité d'eau contenue dans lesdits produits biologiques frais, un mélange pulvérulent comprenant du dextrose et du saccharose et contenant de 37 à 46,5 % en poids de dextrose ;
    - puis, à soumettre l'ensemble à température ambiante à un broyage rapide par cisaillement, de manière à obtenir un mélange intime, pâteux et homogène.

2.  Procédé selon la revendication 1, caractérisé en ce que les produits biologiques sont traités de suite après avoir été récoltés (plantes) ou prélevés.

3.  Procédé selon la revendication 1, caractérisé en ce que les produits biologiques sont des plantes qui ont été préalablement légèrement fanées.

4.  Procédé selon la revendication 1, caractérisé en ce que les produits biologiques frais sont mélangés à une composition stabilisante comprenant en poids :
    - 51 % de saccharose en poudre glace,
    - 42 % de dextrose,
    - 3,5 % de chlorure de sodium,
    - 2,5 % de sorbitol,
    - 1,0 % d'acide citrique.

5.  Procédé selon la revendication 4, caractérisé :
    - en ce que la composition stabilisante est introduite à raison de deux fois trois (2,3) la quantité d'eau contenue dans les plantes fraîches à traiter ;
    - et en ce que ce mélange est effectué à température ambiante simultanément au broyage effectué à son tour par cisaillement.

6.  Produits biologiques pâteux stabilisés par la mise en oeuvre du procédé selon l'une des revendications 1 à 5.

## Patentansprüche

1.  Verfahren zur Stabilisierung und Konservierung von Eigenschaften biologischer Produkte durch Mischen dieser Produkte mit Dextrose, dadurch gekennzeichnet, daß:
    - den genannten frischen biologischen Produkten eine pulverförmige Mischung bestehend aus Dextrose und Saccharose, wobei der Dextrosegehalt 37 bis 46,5 Gew.-% beträgt, in einer Menge entsprechend dem doppelten bis zweieinhalbfachen Wassergehalt in den genannten frischen biologischen Produkten zugesetzt wird; und
    - anschließend das Ganze bei Umgebungstemperatur durch Abscheren schnell vermahlt wird, um so eine innige, homogene teigartige Mischung zu erhalten.

2.  Verfahren nach Anspruch 1, dadurch gekennzeichnet, daß die biologischen Produkte sofort nach der Ernte (Pflanzen) oder Entnahme behandelt werden.

3.  Verfahren nach Anspruch 1, dadurch gekennzeichnet, daß es sich bei den biologischen Produkten um Pflanzen handelt, die zuvor angewelkt wurden.

4.  Verfahren nach Anspruch 1, dadurch gekennzeichnet, daß die frischen biologischen Produkte mit einem Stabilisierungsmittel bestehend aus:
    - 51 Gew.-% Saccharose in der Form von Puderzucker,

- 42 Gew.-% Dextrose,
- 3,5 Gew.-% Natriumchlorid,
- 2,5 Gew.-% Sorbit und
- 1,0 % Zitronensäure vermischt werden.

5. Verfahren nach Anspruch 4, dadurch gekennzeichnet, daß:
- das Stabilisierungsmittel in einer Menge entsprechend dem doppelten/dreifachen (2,3) Wassergehalt in den zu behandelnden frischen Pflanzen zugesetzt wird;
- und daß dieser Mischungsvorgang bei Umgebungstemperatur zugleich mit einer Vermahlung durchgeführt wird, die ihrerseits durch Abscheren durchgeführt wird.

6. Teigartige biologische Produkte, die durch das Verfahren nach einem der Ansprüche 1 bis 5 stabilisiert werden.

**Claims**

1. Method of stabilising and preserving the properties of biological products, in which dextrose is mixed with these products, **characterised** in that it consists in:
- adding to the said fresh biological products, in a proportion of two times to two and a half times the amount of water present in the said fresh biological products, a pulverulent mixture comprising dextrose and sucrose and containing 37 to 46.5% by weight of dextrose;
- and then subjecting the whole, at room temperature, to rapid grinding by shearing, in order to obtain an intimate, pasty and homogeneous mixture.

2. Method according to Claim 1, characterised in that the biological products are treated immediately after harvesting (plants) or collecting.

3. Method according to Claim 1, characterised in that the biological products are plants which have already been allowed to wither slightly.

4. Method according to Claim 1, characterised in that the fresh biological products are mixed with a stabilising composition comprising by weight:
- 51% of icing sucrose,
- 42% of dextrose,
- 3.5% of sodium chloride,
- 2.5% of sorbitol,
- 1.0% of citric acid.

5. Method according to Claim 4, characterised:
- in that the stabilising composition is introduced in an amount of two times three (2,3) the amount of water present in the fresh plants to be treated;
- and in that this mixing is carried out at room temperature at the same time as the grinding which is carried out for its part by shearing.

6. Pasty biological products stabilised by implementing the method according to any one of Claims 1 to 5.